# EUROPEAN PATENT APPLICATION

(11) **EP 4 273 604 A1**
(43) Date of publication of application: **08.11.2023**
(21) Application number: 23171911.3
(22) Date of filing: 05.05.2023
(51) Int. Cl.: G02B 6/44

(54) **FIBER BEND CONTROL FIXTURE**

(30) Priority: 06.05.2022 IN 202211026495
(71) Applicant: Sterlite Technologies Limited, 122102 Haryana (IN)
(72) Inventor: El Allam, Sadek, 20024 Garbagnate Milanese, Milano (IT); Cirisano, Emanuele Pietro, 20024 Garbagnate Milanese, Milano (IT); Zuccarello, Sebastiano, 20024 Garbagnate Milanese, Milano (IT)
(74) Representative: Petraz, Gilberto Luigi

(57) **Abstract**

The present disclosure provides a fiber bend control fixture (100) has a body (102) with a first region (104) and a second region (106) such that the first region (104) has a first length (L1) and a first curved shape and the second region (106) has a second length (L2) and a second curved shape that is capable of mating with the first curved shape. The first region (104) has an outer surface (112) and an inner surface (114) having a substantially 180-degree curvature. The second region (106) has an outer surface (116) and an inner surface (118) having a substantially 180-degree curvature. The body (102) further has a fin (120) radially attached to the outer surface (116) of the second region (106).

## Description

### TECHNICAL FIELD

Embodiments of the present disclosure relate to the field of optical fibers for optical fiber transmission systems and more particularly, relate to a fiber bend control fixture.

This application claims the benefit of Indian Application No. 202211026495 titled "FIBER BEND CONTROL FIXTURE" filed by the applicant on May 7, 2022, which is incorporated herein by reference in its entirety.

### BACKGROUND ART

Cabling is increasingly used in the telecommunications industry to provide data, voice, video, or audio information, as well as power. Such cabling may include various combinations of traditional metal-based wiring, such as copper cables for distributing power or audio, as well as category 5 or 6 cables with reduced cross-talk, or fiber optic cabling. These latter two types of cabling are relied upon to transmit large qualities of information and are sensitive to cable placement and orientation. Cable racks and enclosure systems have been provided to manage and organize such cables to or from equipment or cross-connect systems. These enclosure systems usually include a standard EIA 19" or 23" distribution frame rack, on which one or more enclosures are rack mounted. Such racks provide a system for managing high density fiber connections between a backbone and horizontal cabling, such as a raceway system. These racks also serve as inter-connect or cross-connect enclosures when interfacing with equipment or may serve as a telecommunications closet, allowing the cables such as fiber cables to be terminated, spliced, patched or stored at places along their length. Enclosures within the rack serve various functions, including operation as slack trays, splice trays, and cable organizers.

Optical fiber suffers radiation losses while transmitting optical data due to bending or curvature in the structure of an optical fiber. The bends or curvatures in the optical fiber cause the light to radiate out of the fiber by altering the angle of incidence of the optical signal at the core-cladding interface. Due to one or more missed total internal reflection at multiple points of light incidence due to bends in the optical fiber, the optical signal fails to be retained in the core.

Prior arts US6044194A and US6546179B2, disclose fiber bending control systems that can be fitted by snap-fit or clip unit components.

Other prior arts US6044194A and US6546179B2 do not provide multiple configurations possible by a single unit.

Further, Prior art US6586680B1 discloses a fiber bending control system having multiple configurations achieved through a single unit by way of snap-fitting a plurality of components. However, US6586680B1 uses different components to make multiple configurations.

All the above mentioned prior arts disclose fiber-bending control systems requiring inserts for a whole panel and multiple large fasteners, further requiring special equipment for installation. Furthermore, due to a large length of the fiber bundle, the fiber-bending control systems are not stable and tend upwards, creating a strong aesthetic defect. In light of the above-stated discussion, there is an urgent need for a technical solution that overcomes the above-stated limitations. Thus, the present disclosure aims at providing a stable and inexpensive solution for fiber bending control for optical fibers.

### SUMMARY OF THE DISCLOSURE

Embodiments of the present disclosure provide a fiber bend control fixture with a body comprising a first region and a second region such that the first region has a first length (L1) and a first curved shape and the second region has a second length (L2) and a second curved shape that is capable of mating with the first curved shape. In particular, the first region comprises an outer surface and an inner surface having a substantially 180-degree curvature. Moreover, the second region comprises an outer surface and an inner surface having a substantially 180-degree curvature and a fin radially attached to the outer surface of the second region. Further, the first length (L1) is less than the second length (L2).

In accordance with an embodiment of the present disclosure, the body is hollow.

According to the first aspect of the present disclosure, the body further comprises one or more retention tabs and one or more receivers.

According to the second aspect of the present disclosure, one or more retention tabs are located at a first fit length (FL1) from a proximal end of the fiber bend control fixture such that the first fit length (FL1) is less than the first length (L1). In particular, the one or more receivers are located at a second fit length (FL2) from the distal end of the fiber bend control fixture.

According to the third aspect of the present disclosure, the body further comprising an engagement means disposed on the first region adapted to enable an attachment of the fiber bend control fixture with a back panel of a fiber enclosure.

According to the fourth aspect of the present disclosure, a fiber bend control apparatus comprising a plurality of fiber bend control fixtures with a body having a first region a first region and a second region such that the first region has a first length (L1) and a first curved shape and the second region has a second length (L2) and a second curved shape that is capable of mating with the first curved shape. In particular, the first region comprises an outer surface and an inner surface having a substantially 180-degree curvature. Moreover, the second region comprises an outer surface and an inner surface having a substantially 180-degree curvature and a fin radially attached to the outer surface of the second region

According to the fifth aspect of the present disclosure, the plurality of fiber bend control fixtures comprises two or more fiber bend control fixtures such that, to form the fiber bending control apparatus the two or more fiber bend control fixture are connected along at least one of, the X-axis and the Y-axis.

According to the sixth aspect of the present disclosure, the body further comprising an engagement means disposed of in the first region. The engagement means is adapted to enable an attachment of the fiber bend control fixture with a back panel of a fiber enclosure.

According to the seventh aspect of the present disclosure, an adapter is configured to be engaged with the engagement means such that the adapter is capable of being fitted at the back panel by way of a plurality of fasteners.

The foregoing solutions of the present disclosure are attained by providing a fiber bend control fixture.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A illustrates a top perspective view of the fiber bend control fixture in accordance with an embodiment of the present disclosure;
Fig. 1B illustrates a first side view of the fiber bend control fixture in accordance with an embodiment of the present disclosure;
Fig. 1C illustrates a second side view of the fiber bend control fixture in accordance with an embodiment of the present disclosure;
Fig. 1D illustrates a bottom perspective view of the fiber bend control fixture in accordance with an embodiment of the present disclosure;
Fig. 1E illustrates a bottom view of the fiber bend control fixture in accordance with an embodiment of the present disclosure;
Fig. 1F illustrate a top view of the fiber bend control fixture in accordance with an embodiment of the present disclosure;
Fig. 1G illustrates a front view of the fiber bend control fixture in accordance with an embodiment of the present disclosure;
Fig. 1H illustrate a rear view of the fiber bend control fixture in accordance with an embodiment of the present disclosure;
Fig. 2 illustrates a fiber bend control apparatus in accordance with an embodiment of the present disclosure;
Fig. 3 illustrates another fiber bend control apparatus in accordance with an embodiment of the present disclosure;
Fig. 4 illustrates another fiber bend control apparatus in accordance with an embodiment of the present disclosure;
Fig. 5A illustrates an adapter in accordance with an embodiment of the present disclosure;
Fig. 5B illustrates a front perspective view of another adapter in accordance with an embodiment of the present disclosure;
Fig. 5C illustrates a rear perspective view of the adapter in accordance with an embodiment of the present disclosure;
Fig. 6A illustrates an installation of the adapter on the fiber bend control fixture in accordance with an embodiment of the present disclosure;
Fig. 6B illustrates the installation of the adapter on the fiber bend control fixture in accordance with an embodiment of the present disclosure;
Fig. 6C illustrates an installation of the adapter having the attached fiber bend control fixture onto the back panel of a fiber enclosure in accordance with an embodiment of the present disclosure;
Fig. 7A illustrates an installation of the fiber bend control fixture on the back panel of the fiber enclosure by way of the adapter in accordance with an embodiment of the present disclosure;
Fig. 7B illustrates a direct installation of the fiber bend control fixture on the back panel of the fiber enclosure in accordance with an embodiment of the present disclosure.

The fiber bend control fixture is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The term "proximal end" refers to an end of the fiber bend control fixture 100 that is towards the fiber enclosure when the fiber bend control fixture 100 is installed in the fiber enclosure.

The term "distal end" refers to an end of the fiber bend control fixture 100 that is away from the fiber enclosure when the fiber bend control fixture 100 is installed in the fiber enclosure.

The term "proximal face" as used herein refers to a face of the adapter 500 that is towards the back panel (not shown) of the fiber enclosure.

The term "distal face" as used herein refers to a face of the adapter 500 that is towards the fiber bend control apparatuses 200, 300, and 400.

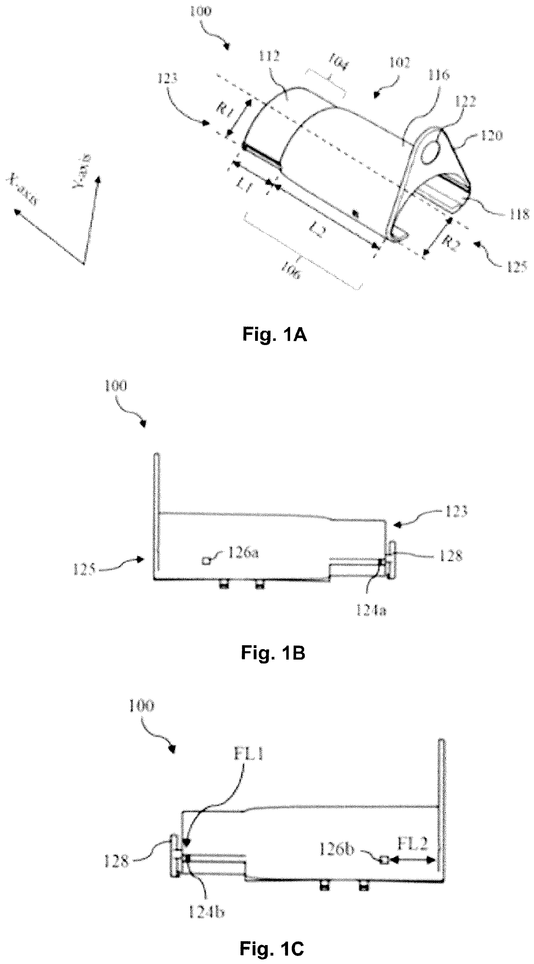

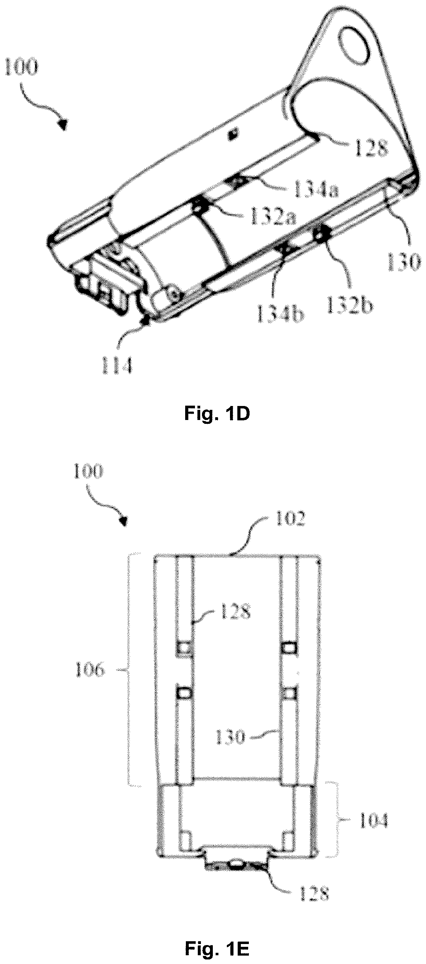

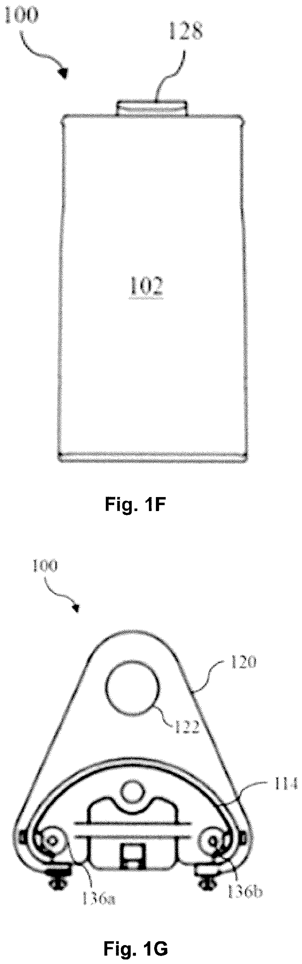

Fig. 1A-1H illustrates different perspective views of a fiber bend control fixture 100 in accordance with various embodiments of the present disclosure. Specifically, the fiber bend control fixture 100 is described in cartesian coordinate system such that a length of the fiber bend control fixture 100 is along an X-axis of the cartesian coordinate system and a height of the fiber bend control fixture 100 is along a Y-axis of the cartesian coordinate system.

In accordance with an embodiment of the present disclosure, the fiber bend control fixture 100 facilitates limit bending of an optical fiber (not shown) during storage inside a fiber enclosure (not shown). In some aspects of the present disclosure, the fiber bend control fixture 100 may be adapted to be fixed over a panel of the fiber enclosure without using fasteners. In particular, the fiber bend control fixture 100 may have a body 102 with a first region 104 and a second region 106. The first region 104 has a first curved shape and the second region 106 have a second curved shape that may be capable of mating with the first curved shape. Moreover, the first and second curved shapes of the first and second regions 104 and 106 may be semi-cylindrical in shape such that the body 102, by virtue of the first and second regions 104 and 106 forms a semi-cylindrical shaped rigid enclosure.

As illustrated, the body 102 is a hollow enclosure that may be adapted to house the optical fibers. The first region 104 may have a first length L1 and a first radius R1 and the second region 106 may have a second length L2 and a second radius R2. The first length L1 of the first region 104 may be less than the second length L2 of the second region 104. Alternatively, the first length L1 of the first region 104 may be in a range of 10 millimeters (mm) to 60 mm and the second length L2 of the second region 106 may be in a range of 60 mm to 120 mm.

In accordance with an embodiment of the present disclosure, the first radius R1 of the first region 104 may be less than the second radius R2 of the second region 106. Alternatively, the first radius R1 of the first region 104 may be in a range of 20 mm to 40 mm and the second radius R2 of the second region 106 may be in a range of 20 mm to 45 mm.

Specifically, the second region 106 of the fiber bend control fixture 100 by virtue of the second length L2 and the second radius R2 may be adapted to receive a first region of an adjacent fiber bend control fixture (that may be similar to the fiber bend control fixture 100) such that the second region 106 of the fiber bend control fixture 100 holds the first region of the adjacent fiber bend control fixture when the first region of the adjacent fiber bend control fixture is inserted into the second region 106 of the fiber bend control fixture 100. In other words, the second region 106 of the fiber bend control fixture 100 having the second length L2 *(i.e.,* greater than a first length of the first region of the adjacent fiber bend control fixture) and the second radius R2 *(i.e.,* greater than a first radius of the first region of the adjacent fiber bend control fixture) may enable attachment of the adjacent fiber bend control fixture to the fiber bend control fixture 100 without need of any additional components.

In accordance with an embodiment of the present disclosure, the first region 104 may have an outer surface 112 and an inner surface 114 (as shown later in FIG. 1D) such that the outer surface 112 and the inner surface 114 of the first region 104 has a curvature that may be in a range of 175 degree to 185 degrees. In particular, the outer surface 112 and the inner surface 114 of the first region 104 may have a substantially 180-degree curvature. Similarly, the second region 106 may have an outer surface 116 and an inner surface 118 such that the outer surface 116 and the inner surface 118 of the second region 106 has a curvature that may be in a range of 175 degree to 185 degrees.

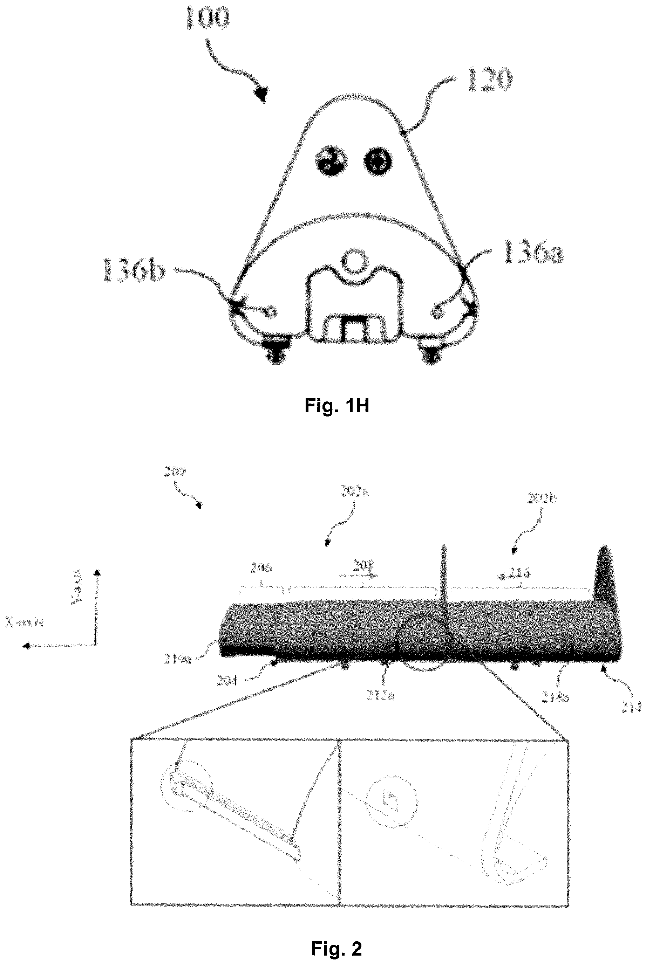

Preferably, the outer surface 116 and the inner surface 118 of the second region 106 may have a substantially 180-degree curvature. The outer surface 112 and the inner surface 114 of the first region 104 and the outer surface 116 and the inner surface 118 of the second region 106 may have the substantially 180-degree curvature to facilitate seamless mating of first and second fiber bend control fixtures 202a and 202b to form a fiber bend control apparatus 200 (as shown later in FIG. 2).

In accordance with an embodiment of the present disclosure, the body 102 further has a fin 120 that may be radially attached to the outer surface 116 of the second region 106. In particular, the fin 120 may be a substantially triangular shaped fin having a through hole 122. The through hole 122 is provided at a central portion of the fin 120 such that the through hole facilitates to connect the first and second fiber bend control fixtures 202a and 202b to form the fiber bend control apparatus 200 by way of one or more fasteners (not shown).

Further, the body 102 has the first region 104, the second region 106, and the fin 120 may be fabricated as a single piece by using a molding process to form the body 102. Examples of the molding process may include, but is not limited to, a compression molding, a melt molding, a transfer molding, an injection molding, and the like. Aspects of the present disclosure are intended to include and/or otherwise cover any type of the molding process to fabricate the body 102, including known, related, and later developed molding processes. Further, the body 102 may be made up of a material such as, but not limited to, metal, plastic, and the like.

The plastic material may include, but is not limited to, polypropylene, Polycarbonate-Acrylonitrile butadiene styrene (PC-ABS), Acrylonitrile butadiene styrene (ABS), Polycarbonate (PC), glass fiber reinforced polypropylene, polyamide 6 (PA6), and the like. Aspects of the present disclosure are intended to include and/or otherwise cover any type of the material of the body 102.

In accordance with an embodiment of the present disclosure, the body 102 may have one or more retention tabs 124 of which first and second side retention tabs 124a and 124b are shown and one or more receivers 126 of which first and second side receivers 126a and 126b. Particularly, the first side retention tab 124a may be a protruded tab provided on a first side of the first region 104. Moreover, the second side retention tab 124b may be a protruded tab provided on a second side that is opposite to the first side of the first region 104.

In some aspects of the present disclosure, the first and second side retention tabs 124a and 124b may be disposed *(i.e.,* located) at first fit length FL1 from a proximal end 123 of the fiber bend control fixture 100.

Preferably, the first fit length FL1 may be less than the first length L1. In some aspects of the present disclosure, the first fit length FL1 may be in a range of 1 millimeter (mm) to 5 mm. Further, the first and second side receivers 126a and 126b may be disposed (*i.e.,* located) at a second fit length FL2 from a distal end 125 of the fiber bend control fixture 100. Preferably, the second fit length FL2 may be less than the second length L2. In some aspects of the present disclosure, the second fit length FL2 may be determined by an equation that states: FL2 = L1 - FL1.

In an exemplary example, when the first length L1 of the first region 104 is 10 mm and the first fit length FL1 is 0 mm (*i.e.,* the first and second side retention tabs 124a and 124b are disposed exactly at the proximal end 123), then the second fit length FL2 is equal to 10 - 0, *i.e.,* 10 mm such that the first and second side receivers 126a and 126b are disposed (*i.e.,* located) at a distance of 10 mm from the distal end 125.

Specifically, the first side receiver 126a may be a through hole provided on a first side of the second region 106. Similarly, the second side receiver 126b may be a through hole provided on a second side that is opposite to the first side of the second region 106. The first side receiver 126a may be adapted to accept a first side retention tab of an adjacent fiber bend control fixture (that may be similar to the fiber bend control fixture 100) and the second side receiver 126b may be adapted to accept a second side retention tab of the adjacent fiber bend control fixture when the fiber bend control fixture 100 is connected with the adjacent fiber bend control fixture to form a fiber bend control apparatus (not shown). In other words, the first side receiver 126a may be adapted to accept the first side retention tab by way of a snap fit mechanism when the adjacent fiber bend control fixture is pushed into the fiber bend control fixture 100 to form the fiber bend control apparatus.

Specifically, the first side receiver 126a and the second side receiver 126b adapted to accept the first side retention tab and the second side retention tab, respectively, may connect the fiber bend control fixture 100 with the adjacent fiber bend control fixture along the X-axis to form the fiber bend control apparatus.

In accordance with an embodiment of the present disclosure, the first and second fit lengths FL1 and FL2 may be provided to locate the first and second side retention tabs 124a and 124b and the first and second side receivers 126a and 126b to connect the fiber bend control fixture 100 and the adjacent fiber bend control fixture along the X-axis. The second region 106 of the fiber bend control fixture 100 having the second length L2 and the second radius R2 may enable attachment of the adjacent fiber bend control fixture to the fiber bend control fixture 100 when the first region of the adjacent fiber bend control fixture is inserted into the second region 106 of the fiber bend control fixture 100 such that first and second retention tabs of the adjacent fiber bend control fixture are locked in the first and second receivers 126a and 126b of the fiber bend control fixture 100.

In accordance with an embodiment of the present disclosure, the fiber bend control fixture 100 may further have an engagement means 128 that may be fixedly attached to the proximal end 123 of the fiber bend control fixture 100. In some aspects of the present disclosure, the engagement means 128 may be a clip that may be fabricated along with the body 102 of the fiber bend control fixture 100 as a single piece by way of the molding process discussed above.

In some aspects of the present disclosure, the engagement means 128 may be removably attached to the body 102 of the fiber bend control fixture 100 by way of a coupling mechanism (not shown) such that the engagement means 128 can be removed from the body 102 when the fiber bend control fixture 100 is attached to another fiber bend control fixture (not shown) to form the fiber bend control apparatus 200. The engagement means 128 may be a T-shaped clip that may facilitate to be engaged with a retaining slot of a back panel (not shown) by way of a snap fit mechanism.

In accordance with an embodiment of the present disclosure, second region 106 of the body 102 may have a first bottom strip 128 and a second bottom strip 130. Particularly, the first bottom strip 128 and the second bottom strip 130 may be extended from the first and second side of the second region 106 of the body 102 such that the first bottom strip 128 and the second bottom strip 130 facilitate the second region 106 to form the substantially 180-degree curvature (as discussed above). Further, the body 102 may have the one or more retention tabs 132 of which first and second bottom retention tabs 132a and 132b are shown and one or more receivers 134 of which first and second bottom receivers 134a and 134b. The first and second bottom retention tabs 132a and 132b and the first and second bottom receivers 134a and 134b may be structurally similar to the first and second side retention tabs 124a and 124b and the first and second bottom side receivers 126a and 126b, respectively. However, the first and second bottom retention tabs 132a and 132b and the first and second bottom receivers 134a and 134b may be disposed at a position that may be different from a position of the first and second side retention tabs 124a and 124b and the first and second side receivers 126a and 126b, respectively.

Although Fig. 1A-1D illustrate that the one or more retention tabs 124, 132 and the one or more receivers 126, 134 are disposed at sides and bottom, respectively of the fiber bend control fixture 100, it will be apparent to a person skilled in the art that the scope of the present disclosure is not limited to it. In various other aspects, the one or more retention tabs 124, 132 and the one or more receivers 126, 134 may be disposed anywhere on the fiber bend control fixture 100 without deviating from the scope of the present disclosure.

In accordance with an embodiment of the present disclosure, the first bottom retention tab 132a may be a protruded tab provided on the first bottom strip 128 of the second region 106. Particularly, the second bottom retention tab 132b may be a protruded tab provided on the second bottom strip 130 of the second region 106. Moreover, the first bottom receiver 134a may be a through hole provided on the first bottom strip 128 of the second region 106. Further, the second bottom receiver 134b may be a through hole provided on the second bottom strip 130 of the second region 106. The first bottom receiver 134a may be adapted to accept a first bottom retention tab and the second bottom receiver 134b may be adapted to accept a second bottom retention tab when the first and second bend control fixtures 202a and 202b are connected to form the fiber bend control apparatus 200. For example, the first bottom and second bottom receivers 134a and 134b may be adapted to accept the first and second bottom retention tabs by way of a snap fit mechanism when the second bend control fixture 202b is pushed into the first bend control fixture 202a to form the fiber bend control apparatus 200.

Specifically, the first bottom receiver 134a and the second bottom receiver 134b of the first fiber bend control fixture 202a may be adapted to accept the first bottom retention tab and the second bottom retention tab, respectively of the second fiber bend control fixture 202b, to connect the first and second bend control fixtures 202a and 202b along the Y-axis to form the fiber bend control apparatus 200.

In accordance with an embodiment of the present disclosure, the fiber bend control fixture 100 may have the body 102 that further has the first region 104, the second region 106, and the engagement means 128. The second region 106 of the body 102 may have the first and second bottom strips 128 and 130 that may facilitate the second region 106 to form the substantially 180-degree curvature.

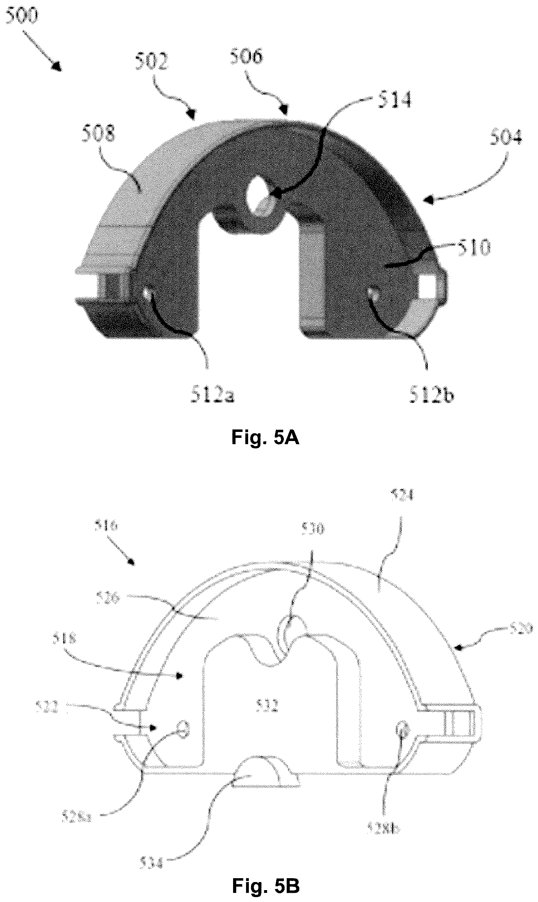

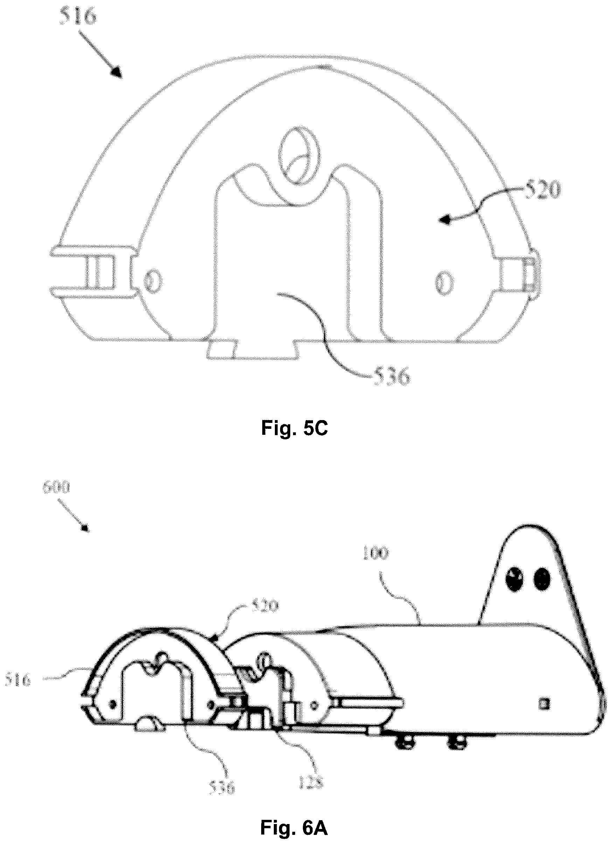

The fiber bend control fixture 100 has the fin 120 radially attached to the outer surface 116 of the second region 106. The fin 120 may have the through hole 122. The fiber bend control fixture 100 may further have a plurality of mating holes 136 of which first and second mating holes 136a and 136b are shown. Specifically, the first and second mating holes 136a and 136b may be provided at the inner surface 114 of the first region 104. The first and second mating holes 136a and 136b may be adapted to facilitate an attachment of the fiber bend control fixture 100 with an adapter 500 (as shown later in FIG. 5) by way of a plurality of fasteners (not shown).

Fig. 2 illustrates the fiber bend control apparatus 200 in cartesian coordinate system such that a length of the fiber bend control apparatus 200 is along an X-axis of the cartesian coordinate system and a height of the fiber bend control apparatus 200 is along a Y-axis of the cartesian coordinate system. In particular, the fiber bend control apparatus 200 may have a plurality of fiber bend control fixtures 202 connected along an X-axis. As illustrated, the plurality of fiber bend control fixtures 202 may have first and second fiber bend control fixtures 202a and 202b. Although FIG. 2 illustrates that plurality of fiber bend control fixtures 202 has two fiber bend control fixtures (*i.e.*, the first and second fiber bend control fixtures 202a and 202b), it will be apparent to a person skilled in the art that the scope of the present disclosure is not limited to it. In various other aspects, the plurality of fiber bend control fixtures 202 may include more than two fiber bend control fixtures without deviating from the scope of the present disclosure. In such a scenario, each fiber bend control fixture is configured to perform one or more operations in a manner similar to the operations of the first and second fiber bend control fixtures 202a and 202b as described herein.

In accordance with an embodiment of the present disclosure, the first and second fiber bend control fixtures 202a and 202b may be structurally and functionally similar to the fiber bend control fixtures 100. In particular, the first and second fiber bend control fixtures 202a and 202b may be attached to one another along the X-axis to form the fiber bend control apparatus 200. Moreover, the first fiber bend control fixture 202a may have a body 204 such that the body 204 has a first region 206 and a second region 208. Further, the first region 204 may have a plurality of retention tabs 210 of which a first retention tab 210a and the second region 206 may have a plurality of receivers 212 of which a first receiver 212a is shown. It will be apparent to a person skilled in the art that the first fiber bend control fixture 202a is shown to include the first retention tab 210a and the first receiver 212a to make the illustrations concise and clear and should not be considered as a limitation of the present disclosure.

In various other aspects, the first fiber bend control fixture 202a can have similar retention tabs and the receivers on the opposite side of the body 204 similar to the first and second retention tabs 124a and 124b and the first and second receivers 126a and 126b of the fiber bend control fixtures 100 as discussed above, without deviating from the scope of the present disclosure.

In accordance with an embodiment of the present disclosure, the second fiber bend control fixture 202b may have a body 214 such that the body 214 has a first region (inserted into the first fiber bend control fixture 202a) and a second region 216. In particular, the first region may have a plurality of retention tabs (not shown). The second region 216 may have a plurality of receivers 218 of which a first receiver 218a is shown. It will be apparent to a person skilled in the art that the second fiber bend control fixture 202b is shown to include the first retention tab and the first receiver 218a to make the illustrations concise and clear and should not be considered as a limitation of the present disclosure. In various other aspects, the second fiber bend control fixture 202b can have similar retention tabs and receivers on the opposite side of the body 214 similar to the first and second retention tabs 124a and 124b and the first and second receivers 126a and 126b of the fiber bend control fixtures 100 as discussed above, without deviating from the scope of the present disclosure.

In operation, the first region of the second fiber bend control fixture 202b may be inserted into the second region 208 of the first fiber bend control fixture 202a such that the first retention tab of the second fiber bend control fixture 202b is engaged with the first receiver 212a of the first fiber bend control fixture 202a to snap fit the first and second fiber bend control fixtures 202a and 202b. In such a scenario, the fiber bend control apparatus 200 is formed by connecting the first and second fiber bend control fixtures 202a and 202b along the X-axis.

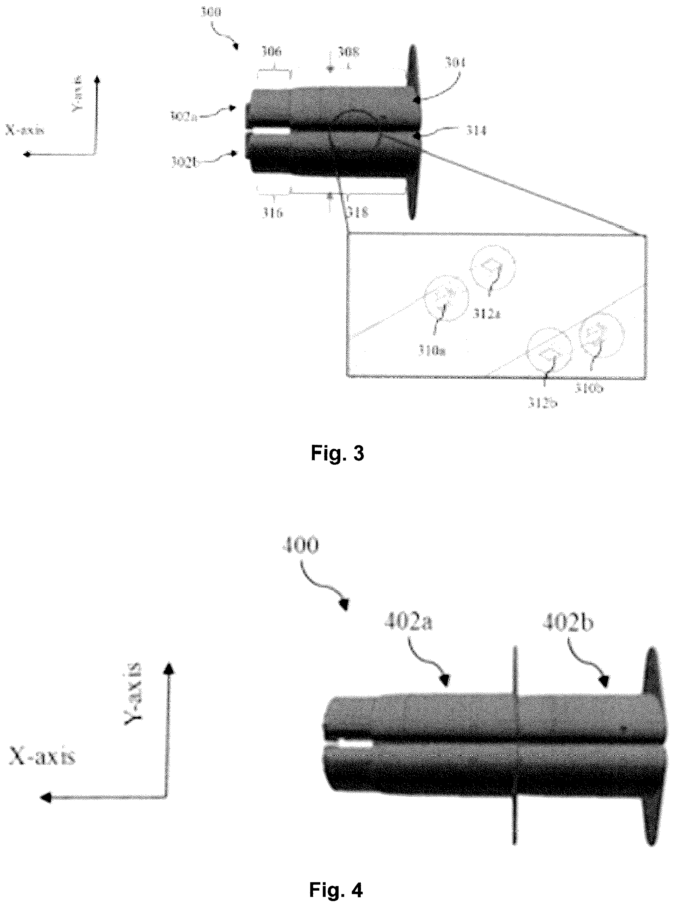

Fig. 3 illustrates another fiber bend control apparatus 300 in accordance with an embodiment of the present disclosure. The fiber bend control apparatus 300 may have a plurality of fiber bend control fixtures 302 connected along the Y-axis. Moreover, the plurality of fiber bend control fixtures 302 may have first and second fiber bend control fixtures 302a and 302b. Although FIG. 3 illustrates that plurality of fiber bend control fixtures 302 has two fiber bend control fixtures (*i.e.*, the first and second fiber bend control fixtures 302a and 302b), it will be apparent to a person skilled in the art that the scope of the present disclosure is not limited to it. In various other aspects, the plurality of fiber bend control fixtures 302 may include more than two fiber bend control fixtures without deviating from the scope of the present disclosure. In such a scenario, each fiber bend control fixture is configured to perform one or more operations in a manner similar to the operations of the first and second fiber bend control fixtures 302a and 302b as described herein.

In accordance with an embodiment of the present disclosure, the first and second fiber bend control fixtures 302a and 302b may be structurally and functionally similar to the fiber bend control fixtures 100. As illustrated, the first and second fiber bend control fixtures 302a and 302b may be attached to one another along the Y-axis to form the fiber bend control apparatus 300. Moreover, the first fiber bend control fixture 302a may have a body 304 such that the body 304 has a first region 306 and a second region 308. Further, the first region 306 may have a plurality of retention tabs 310 of which a first retention tab 310a and a second retention tab 310b are shown. The second region 308 may have a plurality of receivers 312 of which a first receiver 312a and a second receiver 312b are shown.

Similarly, the second fiber bend control fixture 302b may have a body 314 such that the body 314 has a first region 316 and a second region 318. The first region 316 may have a plurality of retention tabs (not shown). The second region 318 may have a plurality of receivers (not shown). Further, the plurality of retention tabs and the plurality of receivers of the second fiber bend control fixture 302b may be substantially similar to the plurality of retention tabs 310 and the plurality of receivers 312 of the first fiber bend control fixture 302a.

In operation, the first fiber bend control fixture 302a and the second fiber bend control fixture 302b may be aligned with each other such that the plurality of retention tabs 310 and the plurality of receivers 312 of the first fiber bend control fixture 302a are aligned onto the plurality of receivers and the plurality of retention tabs and of the second fiber bend control fixture 302b, respectively. Further, the first and second control fixture 302a and 302b may be pushed towards each other such that the plurality of retention tabs 310 of the first fiber bend control fixture 302a are inserted into the plurality of receivers of the second fiber bend control fixture 302b and the plurality of retention tabs of the second fiber bend control fixture 302b are inserted into the plurality of receivers 312 of the first fiber bend control fixture 302a. Specifically, the first and second fiber bend control fixtures 202a and 202b are snap fitted with each other to form the fiber bend control apparatus 300. In such a scenario, the fiber bend control apparatus 300 is formed by connecting the first and second fiber bend control fixtures 302a and 302b along the Y-axis.

Fig. 4 illustrates a fiber bend control apparatus 400. As illustrated, the fiber bend control apparatus 400 is described in cartesian coordinate system such that a length of the fiber bend control apparatus 400 is along an X-axis of the cartesian coordinate system and a height of the fiber bend control apparatus 400 is along a Y-axis of the cartesian coordinate system. The fiber bend control apparatus 400 has a plurality of fiber bend control apparatuses 402 of which first and second fiber bend control apparatuses 402a and 402b are shown. Particularly, the first and second fiber bend control apparatuses 402a and 402b may be structurally and functionally similar to the fiber bend control apparatuses 300. Moreover, the first and second fiber bend control apparatuses 402a and 402b may be connected to each other along the Y-axis thus forming the fiber bend control apparatus 400.

Fig. 5A illustrates an adapter 500 in accordance with an embodiment of the present disclosure. The fiber bend control apparatuses 200, 300, and 400 may have the adapter 500 that may be adapted to facilitate an engagement of the fiber bend control apparatuses 200, 300, and 400 to a back panel (not shown) of a fiber enclosure (not shown) by way of a plurality of fasteners (not shown). The adapter 500 may have a proximal face 502 and a distal face 504. Moreover, the adapter 500 may include a body 506 that may have a semi-circular top surface 508, a panel 510, a plurality of through holes 512 of which first and second through holes 512a and 512b are shown, and a mating cavity 514.

In accordance with an embodiment of the present disclosure, the semi-circular top surface 508 may be attached to the panel 510 such that the panel 510 is substantially perpendicular with respect to the semi-circular top surface 508. Further, the panel 510 may have an opening 516 that may be provided to accept the fiber bend control apparatuses 200, 300, and 400, therein from the distal face 504 of the adapter 500.

For example, the first and second through holes 512a and 512b may be substantially aligned with the first and second mating holes 136a and 136b (as shown in FIG. 1H) of the fiber bend control fixture 100 such that the fiber bend control fixture 100 may be connected to the adapter 500 by way of the plurality of fasteners. The mating cavity 514 may be a hole that may be adapted to facilitate fastening of the adapter 500 and thus in turn fastening of the fiber bend control apparatuses 200, 300, and 400 with the back panel of the of the fiber enclosure by way of one or more fasteners (not shown).

Fig. 5B and 5C illustrates different views of another adapter 516 in accordance with an embodiment of the present disclosure. The adapter 516 may be structurally and functionally similar to the adapter 500. Alternatively, the adapter 516 may have an attachment that restricts rotation of the adapter 516 when installed on the back panel (not shown) of the fiber enclosure (not shown). The fiber bend control apparatuses 200, 300, and 400 may have the adapter 516 that may be adapted to facilitate the engagement of the fiber bend control apparatuses 200, 300, and 400 to the back panel of the fiber enclosure by way of a plurality of fasteners (not shown). The adapter 516 may have a proximal face 518 and a distal face 520. The adapter 518 may further have a body 522 that may have a semi-circular top surface 524, a panel 526, a plurality of through holes of which first and second through holes 528a and 528b are shown, a mating cavity 530, a protruded structure 532, and an engagement element 534.

In accordance with an embodiment of the present disclosure, the semi-circular top surface 524 may be attached to the panel 526 such that the panel 526 is substantially perpendicular with respect to the semi-circular top surface 524. Further, the panel 526 may have the protruded structure 532 may be provided to accept the fiber bend control apparatus 200, 300, and 400, therein. For example, the first and second through holes 512a and 512b may be substantially aligned with the first and second mating holes 136a and 136b fiber bend control fixture 100 such that the fiber bend control fixture 100 may be connected to the adapter 516 by way of the plurality of fasteners.

The engagement element 534 may be the attachment that restricts rotation of the adapter 516 when installed on the back panel (not shown) of the fiber enclosure (not shown). Specifically, the engagement element 534 may be a semi-circular protrusion extending from a bottom end of the protruded structure 532 such that the engagement element 534 is engaged with a hole 606 of the back panel 604 of the fiber enclosure (not shown) to facilitate elimination of rotation of the fiber bend control apparatuses 200, 300, and 400.

In accordance with an embodiment of the present disclosure, the protruded structure 532 may form a cavity 536 that may be adapted to accept the fiber bend control apparatuses 200, 300, and 400 from the distal face 520 of the adapter 516 to facilitate attachment of the fiber bend control apparatuses 200, 300, and 400 with the back panel 604 of the fiber enclosure.

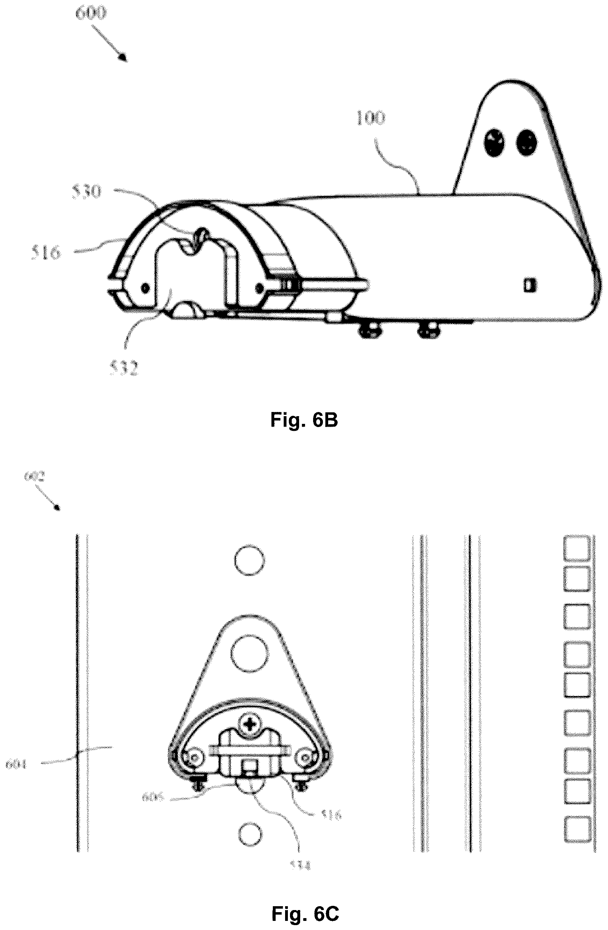

Fig. 6A and 6B illustrate an installation 600 of the adapter 516 on the fiber bend control fixture 100 in accordance with one or more embodiments of the present disclosure. In operation, the adapter 516 may be aligned with the fiber bend control fixture 100 such that the fiber bend control fixture 100 is inserted into the cavity 536 from the distal face 520 of the adapter 516 and is engaged with the adapter 516.

In accordance with an embodiment of the present disclosure, the engagement means 128 of the fiber bend control fixture 100 may be inserted into the cavity 536 formed by the protruded structure 532 of the adapter 516. Further, the adapter 516 and the apparatus 100 may be attached to each other by way of a fastener inserted through the mating hole 530 of the adapter 516.

Fig. 6C illustrates an installation 602 of the adapter 516 having the attached fiber bend control fixture 100 onto the back panel 604 of a fiber enclosure in accordance with an embodiment of the present disclosure. In operation, the engagement element 534 of the adapter 516 may be inserted into a hole 606 of the back panel 604 such that the engagement element 534 is engaged with the hole 606 thus facilitating in elimination of any rotation of the fiber bend control fixture 100. It will be apparent to a person skilled in the art that FIGs 6A-6C illustrates the installations of the adapter 516 to the fiber bend control fixture 100 to make the illustrations concise and clear and should not be considered as a limitation of the present disclosure. In various other aspects, the adapter 516 can be installed with the fiber bend control apparatuses 200, 300, 400 in a manner similar to the installation of the adapter 516 with the fiber bend control fixture 100, without deviating from the scope of the present disclosure.

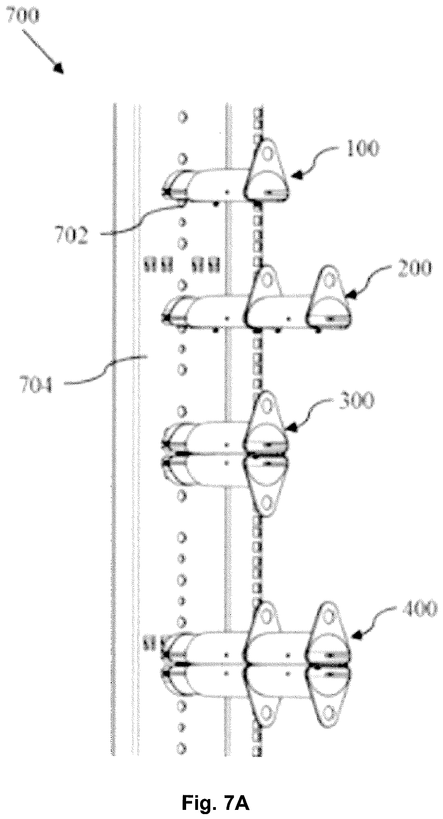

Fig. 7A illustrates an installation 700 of the fiber bend control fixture 100, the fiber bend control apparatus 200, the fiber bend control apparatus 300, and fiber bend control apparatus 400 on a back panel 704 of the fiber enclosure by way of an adapter (*i.e.*, the adapters 500 and 516). For example, the engagement element 534 of the adapter 516 may be inserted into a hole 702 of the back panel 704 such that the engagement element 534 is engaged with the hole 702 thus facilitating in elimination of any rotation of the fiber bend control fixture 100. As discussed above, the installation of the fiber bend control fixture 100 is explained. However, the fiber bend control apparatus 200, the fiber bend control apparatus 300, and fiber bend control apparatus 400 may be installed on the back panel 704 of the fiber enclosure by way of the adapter 516 in a manner similar to the installation of the fiber bend control fixture 100, without deviating from the scope of the present disclosure.

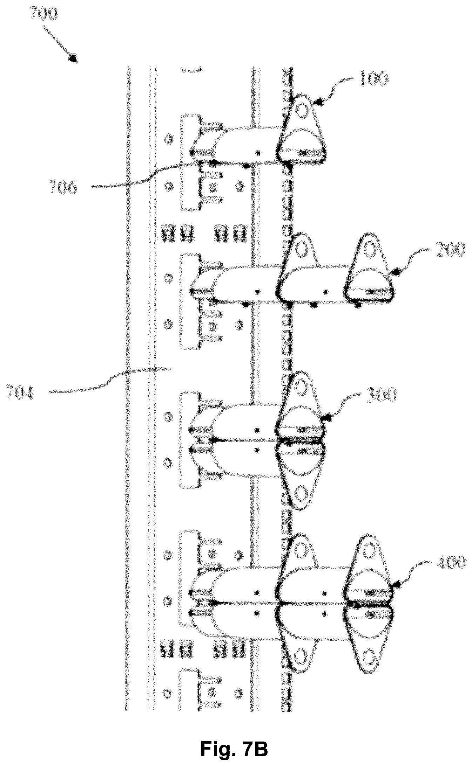

Fig. 7B illustrates a direct installation 702 of the fiber bend control fixture 100, the fiber bend control apparatus 200, the fiber bend control apparatus 300, and fiber bend control apparatus 400 on the back panel 704 of the fiber enclosure in accordance with an embodiment of the present disclosure. For example, the engagement means 128 of the fiber bend control fixture 100 may be directly inserted into a panel through hole 706 such that the fiber bend control fixture 100. As discussed above, the installation of the fiber bend control fixture 100 is explained. However, the fiber bend control apparatus 200, the fiber bend control apparatus 300, and fiber bend control apparatus 400 may be installed on the back panel 704 of the fiber enclosure directly in a manner similar to the installation of the fiber bend control fixture 100, without deviating from the scope of the present disclosure.

Thus, the fiber bend control apparatus 200, 300, 400 may be a cost-effective apparatus that may be formed by one or more fiber bend control fixtures 100 by virtue of snap fit mechanism, without using any additional attachments. Further, the fiber bend control apparatus 200, 300, 400 may be an ergonomic product that can provide improved functionalities by providing multiple separator fins (*i.e.,* the fin 120) to better organize bundles of optical fibers. Furthermore, the fiber bend control fixture 100 provides modularity to form the fiber bend control apparatus 200, 300, 400 that can be utilized based on different requirements.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A fiber bend control fixture (100) **characterized in that**:
a first region (104) and
a second region (106) such that the first region (104) has a first length (L1) and a first curved shape and the second region (106) has a second length (L2) and a second curved shape that is capable of mating with the first curved shape,
wherein the first region (104) comprises
an outer surface (112) and an inner surface (114) having a substantially 180-degree curvature, and
wherein the second region (106) comprises
an outer surface (116) and an inner surface (118) having a substantially 180-degree curvature; and
a fin (120) radially attached to the outer surface (116) of the second region (106).

2. The fiber bend control fixture (100) according to claim 1, wherein the first length (L1) is less than the second length (L2).

3. The fiber bend control fixture (100) according to claim 1, wherein the body (102) is hollow.

4. The fiber bend control fixture (100) according to claim 1, wherein the body (102) further comprising one or more retention tabs (124, 132) and one or more receivers (126, 134).

5. The fiber bend control fixture (100) according to claim 4, wherein the one or more retention tabs (124) are located at a first fit length (FL1) from a proximal end (123) of the fiber bend control fixture (100) such that the first fit length (FL1) is less than the first length (L1) and wherein, the one or more receivers (126) are located at a second fit length (FL2) from the distal end (125) of the fiber bend control fixture (100).

6. The fiber bend control fixture (100) according to claim 1, wherein the body (102) further comprising an engagement means (128) disposed on the first region (104), wherein the engagement means (128) is adapted to enable an attachment of the fiber bend control fixture (100) with a back panel (604, 704) of a fiber enclosure.

7. A fiber bend control apparatus (200, 300, 400) **characterized in that**:
a plurality of fiber bend control fixtures (100), wherein each fiber bend control fixture of the plurality of fiber bend control fixtures (100) comprising:
a body (102) comprising:
a first region a first region (104) and a second region (106) such that the first region (104) has a first length (L1) and a first curved shape and the second region (106) has a second length (L2) and a second curved shape that is capable of mating with the first curved shape, wherein the first region (104) comprises an outer surface (112) and an inner surface (114) having a substantially 180-degree curvature, and wherein the second region (106) comprises an outer surface (116) and an inner surface (118) having a substantially 180-degree curvature; and
a fin (120) radially attached to the outer surface (116) of the second region (106).

8. The fiber bending control apparatus (200, 300, 400) according to claim 7, wherein the first length (L1) is less than the second length (L2).

9. The fiber bending control apparatus (200, 300, 400) according to claim 7, wherein the body (102) is hollow.

10. The fiber bending control apparatus (200, 300, 400) according to claim 7, wherein the plurality of fiber bend control fixtures (100) comprises two or more fiber bend control fixtures such that, to form the fiber bending control apparatus (200, 300, 400), the two or more fiber bend control fixture are connected along at least one of, the X-axis and the Y-axis.

11. The fiber bending control apparatus (200, 300, 400) according to claim 7, wherein the body (102) further comprising one or more retention tabs (124, 132) and one or more receivers (126, 134).

12. The fiber bending control apparatus (200, 300, 400) according to claim 11, wherein the second region (106) comprising first and second strips (128 and 130) such that the one or more retention tabs (132) and the one or more receivers (134) are provided on the first and second strips (128, 130) respectively.

13. The fiber bending control apparatus (200, 300, 400) according to claim 7, wherein the body (102) further comprising an engagement means (128) disposed on the first region (104).

14. The fiber bending control apparatus (200, 300, 400) according to claim 7, wherein the engagement means (128) is adapted to enable an attachment of the fiber bend control fixture (100) with a back panel (604, 704) of a fiber enclosure.

15. The fiber bending control apparatus (200, 300, 400) according to claim 7, further comprising an adapter (500, 516) to be engaged with the engagement means (128) such that the adapter (500, 516) is capable of being fitted at the back panel (604, 704) by way of a plurality of fasteners.
